(19) **Europäisches Patentamt**

**European Patent Office**

**Office européen des brevets**

(11) Publication number: **0 282 683 B1**

## (12) EUROPEAN PATENT SPECIFICATION

(45) Date of publication of patent specification: **13.05.92**

(51) Int. Cl.[5]: **A01K 61/02**, B65G 33/14

(21) Application number: **87850086.7**

(22) Date of filing: **17.03.87**

(54) **An arrangement in a dosing device.**

(43) Date of publication of application:
**21.09.88 Bulletin 88/38**

(45) Publication of the grant of the patent:
**13.05.92 Bulletin 92/20**

(84) Designated Contracting States:
**BE DE ES FR GB IT NL SE**

(56) References cited:
**DE-B- 1 280 157**
**DE-U- 7 333 232**
**DE-U- 8 612 220**
**FR-A- 2 560 498**
**US-A- 3 307 683**

(73) Proprietor: **Heyerdahl, Petter H.**
**Samfunnsveien 4**
**N-1430 As(NO)**

(72) Inventor: **Heyerdahl, Petter H.**
**Samfunnsveien 4**
**N-1430 As(NO)**

(74) Representative: **Graudums, Valdis et al**
**Albihn West AB Stora Nygatan 15**
**S-411 08 Göteborg(SE)**

# Description

The present invention relates to a dosing device for powder, pellets, granulates, and the like, especially intended for dosing feed for farmed fish, according to the preamble of claim 1.

Dosing devices for feed to fish for stocking, and fish for farming are in practice called automatic feeders. A series of automatic feeders for fish is known. In practical use and especially in connection with tests it proved that none of the dosing devices in the market meet the requirements that may be reasonably made to a good automatic feeder. Especially, they fail as regards fine adjustment for administration of small amounts of feed that is relatively viscous.

Known conveying devices include an arrangement described in US-A-3 307 683 upon which the preamble of claim 1 is based. In this document, material to be conveyed is fed vertically into a horizontal section of a conveyor tube. Within the tube a flattened coil spring acts as the conveyor element. From its horizontal section, the conveyor tube extends vertically downwards and thereafter horizontally to an outlet opening in a downwards facing peripheral portion of the tube. A further horizontally extending conveying device is known from DE-U-86 12 220 in which material is fed vertically into a horizontal portion of a conveyor tube and is conveyed along the tube by means of a driven helical spring. In both these devices, due to the introduction of the material in a horizontal,portion of the conveyor tube, a uniform comprimation of the material cannot be assured. A conveying device in which the material to be conveyed is introduced vertically into a vertical portion of a conveying tube is known from DE-B-1 280 157. In this case, however, the feeding screw is a rigid helical feeding screw.

The greatest problems arise in connection with very small fish, and especially in the starter feed period. When the fishes are small they must be fed often, e.g. up to five times every hour, and very small doses are to be delivered each time, down to 0.1 g. Inaccurate dosing will either cause overfeeding or underfeeding. In case of underfeeding the fish will grow too slowly and, thus, the plant is not optimally utilized. Feed residues will contaminate the vessel and require frequent cleaning. This will cause stress and harm to the fish.

It is an object of the present invention to provide a dosing device for pellets, powder, and the like, especially an automatic feeder for fish for stocking, by the aid of which it is possible to achieve:

1. Great accuracy, also in case of small amounts of feed, down to 50 mg/sec.
2. Stability for a long time.
3. Gentle handling of the feed.
4. Elimination of bridge forming, rat holes, and clogging.
5. A small outlet causes minimal exposure of the feed to moisture.

According to the invention this is achieved by an arrangement according to claim 1.

Preferred embodiments of the invention are given in the dependent claims.

Further features and details of the invention will appear from the following description with reference to the drawing, where

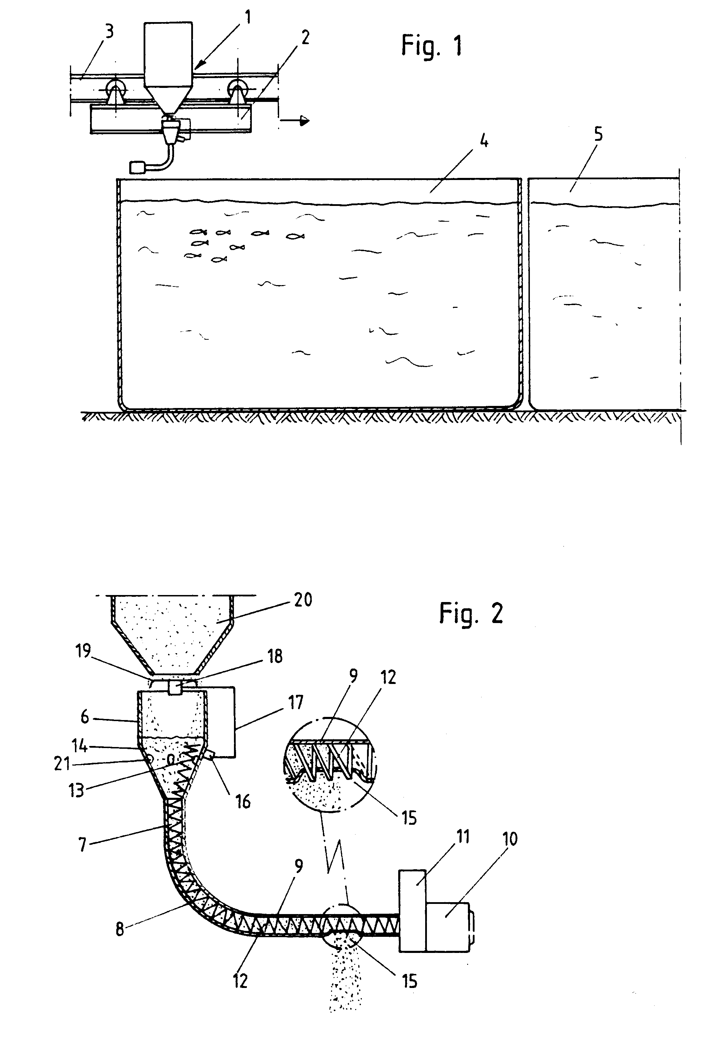

Figure 1 is a diagrammatical view of a device according to the invention in use in a farming plant for fish for storage, and

Figure 2 shows a preferred embodiment of the invention.

The dosing device according to the invention is in this case used as an automatic feeder 1 that is provided on a crane trolley 2 that is movable on rails 3 across a number of farming containers 4 and 5. The dosing device comprises an input hopper 6 which smoothly transits into a vertical tube 7 which, in turn, via a curved portion 8 transits into a horizontal portion. At the end of said horizontal portion a motor 10 with a transmission 11, e.g. a gear wheel motor is provided. Said motor drives a feed screw 12 which in this embodiment is a helical spring made of spring wire. Said motor is infinitely variable as regards speed, and screw 12 can, thus, be adjusted to the desired feeding velocity. The free upper end of spring 12 is bent in a certain angle that is adapted to the shape of hopper 6. When helical spring 12 rotates said angular end 13 will sweep about in hopper 6 and feed the material to be conveyed 14 in hopper 6 down to pipe 7. In the horizontal portion 9 of the pipe a slot shaped opening 15 facing downwards is provided to serve as an outlet for the material.

Due to the fact that the conveying pipe is rising vertically at its inlet gravity together with the screw effect will feed the material towards the outlet and pack said material to a homogeneous mass showing a very uniform degree of comprimation. With a certian speed of screw rotation the amount passing through opening 15 will, thus, be very uniform all the time. If it is desirable to increase or decrease the amount of material fed out the speed of rotation of screw 12 is changed by adjusting the motor 10. The material is fed and homogeneously comprimated without any tendency of agglomeration or formation of chunks or of bridges of the feed occurring. This is mainly due to the fact that the material to be conveyed must only be subjected to very weak forces to be fed through the pipe. Introduction into said pipe is mostly achieved by gravity and feeding through the horizontal portion is partly achieved by rotation of said screw and partly by the aid of the vibration occurring when the screw rotates and is intermittently braked by contact with the internal wall face, especially in bend 8, and is abruptly released when the frictional engagement ends. Said screw, i.e. the helical screw 12 both feeds and vibrates the material onward. Due to the smooth transition between hopper 6 and portion 7 of the pipe said screw will not tend to crush big grains or pellets.

It is a condition for the most uniform feeding possible of the material in the device that the input hopper 6 is maintained uniformly filled with material to be conveyed. In the embodiment this is achieved by the aid of a capacitive sensor of proximity 16 transmitting a signal, via a circuit 17 to a vibrator 18 which is attached to a tray 19 which is provided below the outlet of a feed tank 20. The capacitive sensor of proximity, thus, controls replenishing of hopper 6. Said vibrator 18 is coarsely adjusted to avoid clogging, and it is provided closely above hopper 6 to ensure minimum penetration of moisture. Said vibrator acts as a sieve for any large particles that might be present in the feed in order to protect the screw.

The motor and drive means 10, 11 may, in practice, be provided very closely to outlet 15, so that the deviation of the angle of rotation between drive means and the dosing portion of the screw is negligible, also in case of high moments of rotation. In this manner the rotation of said screw is well defined by the speed of rotation of the drive means, and high accuracy may be maintained, even if the conditions of operation are difficult.

The device according to the invention proved to be able to dose even very difficult materials in difficult circumstances with great accuracy and high stability. Tests showed that the variation of delivered matter is completely negligible even in cases of powder shaped feed material having a high fat content, and when the automatic feeder according to the invention was provided directly above water level. Under such circumstances the feed normally gets very sticky, and it was previously impossible to achieve completely constant feeding by the aid of existing automatic feeders.

With the device according to the invention a dosing device e. g. an automatic feeder for farmed fish, is achieved which can be manufactured at a very advantageous price, which permits an ample and stable degree of filling to be achieved in the device, which is gentle with pellets and unstable matter, e.g. material with a high fat content, which comprises few parts that may readily be dismantled for cleaning and maintenance, which device has a stable characteristic since packing in the screws is approximately independent of the level of feed in the tank, in which device the agitator inside the inlet hopper is formed by the external free portion of the screw, and which secures stable delivery of material since the portion of the screw being closest to the drive means defines the delivery.

Further vibration of the feeding screw is achieved if a number of bosses 21 is provided inside said hopper which the free bent-off portion of the screw will hit when rotating.

The invention is not limited to the above disclosed embodiment, but may be modified in many ways within the scope of the following claims. Thus, the conveying pipe may be provided with several curved portions 8.

The device according to the invention is well suited for programming as regards feed type, different volumes of feed to different breeding tanks, e.g. from 0.1 to 30 g to each tank, and times of feeding. The device may also be combined with a data logger.

## Claims

1. An arrangement in a dosing device for pellets, granulates, powder and the like, especially for use as an automatic feeder for fish for storage, comprising a drive means driving an elastic feeding screw (12) which is provided with a small clearance in a conveying tube (7, 8, 9) having an inlet part which extends approximately in a vertical direction downwards from an input hopper (6) and changes into a curved portion (8) which, in turn, changes into an essentially horizontal portion (9) having an outlet opening (15) in a downwards facing peripheral portion thereof, **characterized in** that said inlet part of the conveying tube is a direct, substantially vertical extension of the input hopper (6) and in that the elastic feeding screw (12) consists of a longitudinally extending single helical spring wire forming a central passage for the axial introduction of the pellets, granulates, powder and the like into said central passage, and for their subsequent conveyance.

2. A device as defined in claim 1, **characterized in** that said screw is a helical spring (12) made from spring steel.

3. A device as defined in claim 1 or 2, **characterized in** that said screw (12) is driven at the outlet end, and that it is extended at the inlet end to form an angle with the longitudinal axis of the screw in the vertical section of the conveying tube, thereby forming an agitator in the inlet hopper (6).

4. A device as defined in claim 3, **characterized in** that bosses or the like are provided on the interior of said hopper in the rotational path of said screw extension.

5. A device as defined in one or several of the preceding claims, **characterized in** that a level gauge is associated with said inlet hopper (6), and in case of a minimum value not being reached will transmit a signal to a vibrator (18) which actuates a feeding tray (19) for supplying more material to inlet hopper (6) from a feed tank (20).

## Revendications

1. Agencement dans un doseur pour boulettes, granulés, poudre et analogue, utilisable en particulier en tant que dispositif d'alimentation automatique pour poissons destinés à l'empoissonnement, comprenant un moyen d'entraînement qui entraîne une vis d'alimentation élastique (12) qui est placée avec un petit jeu dans un tube transporteur (7, 8, 9) comportant une partie d'entrée qui s'étend sensiblement en direction verticale vers le bas depuis une trémie d'entrée (6) et qui se prolonge par une partie incurvée (8) qui se prolonge elle-même par une partie sensiblement horizontale (9) comportant une ouverture de sortie (15) dans une partie périphérique tournée vers le bas, caractérisé en ce que ladite partie d'entrée du tube transporteur est un prolongement direct sensiblement vertical de la trémie d'entrée (6) et en ce que la vis d'alimentation élastique (12) consiste en un seul fil métallique à ressort hélicoïdal qui s'étend longitudinalement en formant un passage central pour l'introduction axiale des boulettes, des granulés, de la poudre et analogue dans ledit passage central et pour leur transport subséquent.

2. Dispositif selon la revendication 1, caractérisé en ce que ladite vis est un ressort hélicoïdal (12) en acier à ressort.

3. Dispositif selon la revendication 1 ou 2, caractérisé en ce que ladite vis (12) est entraînée à l'extrémité de sortie et en ce qu'elle se prolonge à l'extrémité d'entrée pour former un angle avec l'axe longitudinal de la vis dans la section verticale du tube transporteur, en formant ainsi un agitateur dans la trémie d'entrée (6).

4. Dispositif selon la revendication 3, caractérisé en ce que des protubérances ou analogues sont prévues à l'intérieur de ladite trémie dans la trajectoire de rotation dudit prolongement de la vis.

5. Dispositif selon une ou plusieurs des revendications précédentes, caractérisé en ce qu'une jauge de niveau est associée à ladite trémie d'entrée (6) et, lorsqu'une valeur minimale n'est pas atteinte, transmet un signal à un vibrateur (18) qui actionne un plateau d'alimentation (19) pour fournir une plus grande quantité de produit à la trémie d'entrée (6) depuis un réservoir d'alimentation (20).

## Patentansprüche

1. Anordnung in einer Dosiervorrichtung für Pellets, Granulate, Pulver und dergleichen, insbesondere zur Verwendung als automatische Fischfüttereinrichtung aus einem Vorrat, bestehend aus einer Antriebseinrichtung, welche eine elastische Förderschnecke (12) antreibt, welche in einem kleinen Zwischenraum in einem Transportrohr (7, 8, 9) vorgesehen ist, welches einen Einlaßabschnitt besitzt, der sich annähernd in einer vertikalen Richtung von einem Einlaßtrichter (6) nach unten erstreckt und in einen gekrümmten Abschnitt (8) übergeht, der seinerseits in einen in etwa horizontalen Abschnitt (9) übergeht, der eine Auslaßöffnung (15) an seinem nach unten weisenden Umfangsabschnitt aufweist, **dadurch gekennzeichnet,** daß der Einlaßabschnitt des Transportrohres aus einer direkten in etwa vertikalen Verlängerung des Einlaßtrichters (6) besteht und daß die elastische Förderschnecke (12) aus einem sich in Längsrichtung erstreckenden einzigen Schraubenfederdraht besteht, der einen zentralen Kanal für das axiale Einführen der Pellets, des Granulats, des Pulvers und dergleichen in den zentralen Kanal und für deren darauffolgenden Transport bildet.

2. Anordnung nach Anspruch 1, dadurch gekennzeichnet, daß die Schnecke aus einer Schraubenfeder (12) besteht, die aus einem Federstahl hergestellt ist.

3. Anordnung nach Anspruch 1 oder 2, dadurch gekennzeichnet, daß die Schnecke (12) an dem Auslaßende angetrieben ist und daß sie an dem Einlaßende unter Bildung eines Winkels mit der Längsachse der Schnecke in dem vertikalen Abschnitt des Transportrohrs zwecks Herstellung eines Rührers in dem Einlaßtrichter (6) verlängert ist.

4. Anordnung nach Anspruch 3,
   dadurch gekennzeichnet,
   daß an dem Inneren des Trichters in dem Drehweg der Schneckenverlängerung erhabene Beschläge (21) oder dergleichen vorgesehen sind.

5. Anordnung nach einem oder mehreren der vorangehenden Ansprüche,
   dadurch gekennzeichnet,
   daß dem Einlaßtrichter (6) ein Füllstandsmesser zugeordnet ist, der, damit ein minimaler Wert nicht erreicht wird, ein Signal an einen Vibrator (18) überträgt, welcher einen Zuführboden (19) für das Zuführen von weiterem Material aus einem Futtertank (20) in den Einlaßtrichter (6) betätigt.

# Fig. 1

# Fig. 2